# EUROPEAN PATENT SPECIFICATION

(11) **EP 1 561 883 B1**
(45) Date of publication and mention of the grant of the patent: **10.10.2007**
(21) Application number: 05075067.8
(22) Date of filing: 14.01.2005
(51) Int. Cl.: E04H 12/08, F03D 11/04

(54) **Tower for a wind turbine, prefabricated metal wall part for use in tower for a wind turbine and method for constructing a tower for a wind turbine**
Windkraftanlageturm, vorgefertigtes metallisches Wandteil zum Gebrauch in diesem Turm, und Verfahren zur Herstellung dieses Turms
Tour d'éolienne, partie de paroi métallique préfabriquée pour utiliser dans un tel tour, et procédé de construction d'un tel tour

(30) Priority: 04.02.2004 EP 04075337
(43) Date of publication of application: 10.08.2005
(73) Proprietor: Corus Staal BV, 1970 CA Ijmuiden (NL)
(72) Inventor: Sportel, Heiko, 1911 CE Uitgeest (NL)
(74) Representative: Kruit, Jan

(56) References cited:
- EP-A- 0 960 986
- EP-A- 1 156 175
- EP-A- 1 606 514
- WO-A-03/069099
- DE-A- 19 832 921
- FR-A- 2 621 343
- FR-A- 2 749 342
- GB-A- 629 078

## Description

This invention relates to a tower for a wind turbine which has an exterior side and an interior side and which tower is at least partly composed of prefabricated metal wall parts. The invention also relates to a prefabricated metal wall part for use in a tower for a wind turbine. The invention further relates to a method for constructing a tower for a wind turbine which has an exterior side and an interior side and wherein the tower is at least partly composed of prefabricated metal wall parts.

An ongoing trend in the wind turbine market is the increasing power of the wind turbine in conjunction with increasing tower heights. Larger wind turbines imply an increase in size, weight and loads acting on the tower of the wind turbine. This requires the towers to be stronger and stiffer, and consequently lead to bigger tower dimensions.

Conventional tubular steel towers for wind turbines of 2 MW and above require very large tower diameters and/or large wall thickness to take the large static and fatigue loads which are exerted on the wind turbine. These large towers are usually constructed by prefabricating a number of tower sections from metal plate by welding curved plates together, often referred to as "cans", and transporting these sections to the site where the tower is to be erected. These sections or cans are bolted to the foundation of the tower and to each other using curved L-type flanges requiring a large number of large bolts. The increasing power of the wind turbines also require the flanges to be produced with an increasing accuracy as to flatness. For land transport, the diameter of the tower section is the main restriction. A diameter of about 4.3 m is usually the upper limit that can be transported to most locations in view of fly-overs etc., and the weight of the section imposes its limits as well.

In use, the forces exerted on the top of the tower by the rotor-turbine assembly determine the load, i.e. the bending moments at all essentially horizontal flange connections and welds. The ultimate strength is determined by the yield strength of the bolts and by the buckling strength of the tubular metal wall. For the fatigue strength the welds are critical. During service, it is very difficult to inspect the quality of a weld. Also, on-site repairs are awkward.

Apart from the strength, the dynamic behaviour of the tower is another determining factor. The turbine would be severely damaged if it were to operate at its natural resonance frequency.

It is known to increase natural frequency and/or the strength and/or stiffness of a wind turbine by increasing the thickness of the metal plate and/or the diameter of the tower. However, transport problems due to size and weight of the tower sections make this solution impractical. Also lattice towers have been used to increase the stiffness of towers for wind turbines. However, lattice towers require a very large number (>2000) of individual parts, significant amounts of maintenance and are considered visually unattractive. Moreover, the dynamic behaviour of such towers is not adequate for large towers. Guyed towers have also been used for wind turbines. These towers are guyed with steel cables at about half the height of the tower. Obviously, this poses a design problem as the cables may not come into contact with the rotor of the wind turbine. Moreover, the costs of the foundations for the cables and the cables itself (with diameters of about 100 mm) are high. Also the cables need to have high fatigue strength.

Hybrid towers, such as towers with concrete walls, poured between an inner and outer steel shell have also been proposed. The problem is to assure the quality of the wall, once it has been poured. When constructing a tower for a wind turbine using prefabricated concrete elements, tension means are required to keep the concrete wall under compressive forces. Moreover, concrete towers are not an economical solution.

FR 2621343 discloses a method for constructing supports for signs or cables consisting of three identical prefabricated metal elements by bolting the flanges of the elements together to form a support. The flanges of the elements are directed outwardly.

EP-A-1 606 514 is a non-prepublished prior right under Art 54(3) EPC and discloses a steel tower for a windmill comprising a number of cylindrical or tapered tower sections, at least the wider sections of which being subdivided into two or more elongated shell segments, which combine into a complete tower section by means of vertical flanges tightened together, said shells being also provided with upper and lower horizontal flanges, to allow interconnection of tower sections one on top of the other.

It is the object of this invention to provide a tower for a wind turbine which provides a large stiffness. It is another object of this invention to provide a tower for a wind turbine which provides sufficient strength to enable application of high power generators on top of the tower. It is still another object of this invention to provide a tower for a wind turbine which does not cause the aforementioned transport problems, even for very large towers and/or towers with a wide base.

According to a first aspect of the invention, one or more of these objects can be reached by a tower for a wind turbine wherein the tower has an exterior side and an interior side and wherein the tower is at least partly composed of prefabricated metal wall parts wherein each wall part comprises an essentially quadrangular portion having an outwardly facing surface in the direction of the exterior of the tower and an inwardly facing surface in the direction of the interior of the tower, said portion having a top edge, a bottom edge, a first side edge and a second side edge, wherein the first side edge is provided with a first flange along at least part of the length of the first side edge and wherein the second side edge is provided with a second flange along at least part of the length of the second side edge. By using the prefabricated metal wall parts according to the invention, the stiffness of the construction is increased by the presence of the flanges of the prefabricated metal wall parts, which act as a rib. By using prefabricated metal wall parts, the transport of complete tower sections is no longer required, thus solving the transport problem. The prefabricated metal wall parts are easy to transport with ordinary transport means such as trucks. The quadrangular portion of the first prefabricated metal wall parts is essentially flat. The use of an essentially flat quadrangular portion has the advantage that there is no need for a locally dependent curvature in the quadrangular portion and is therefore easier to produce. It is also more convenient during transport of the prefabricated metal wall parts. The application of such prefabricated metal wall parts causes the exterior of the tower to be polygonal. Also, by using the prefabricated parts, the size of the tower at the foundation is no longer limited by the transport restrictions and a wider base can be used. It also allows construction of higher towers because the size of the base is no longer an issue. The wider base results in a lower local pressure on the foundation, thus enabling to use a simpler foundation. The wider base also contributes to the stiffness of the tower, thereby enabling to use high power generators on top of the tower. In an embodiment of the invention the tower is substantially composed of prefabricated metal wall parts. The tower according to this embodiment relies on prefabricated metal wall parts as the load bearing elements, and are readily distinguishable from concrete towers, where a wall part serves as a mould for the concrete to be poured in and where, after setting, the concrete serves as the main load bearing material. It should be noted that the tower according to the invention does not comprise concrete as a load bearing material at the location of the prefabricated metal wall parts. It should also be noted that it is possible to construct a tower according to the invention on top of a concrete foundation or base wherein the concrete base extends upwardly, the base forming the lower part of the tower, and a tower according to the invention forming the upper part of the tower.

In the invention the first flanges and the second flanges of the prefabricated metal wall parts extend towards the interior side of the tower. This enables to produce a tower where the rib, formed by the adjacent flanges, is located on the inside of the tower, leaving a smooth exterior appearance. A smooth exterior leads to a reduced impact of wind force on the tower and a smooth exterior is considered to be visually more attractive.

In an embodiment of the invention, the prefabricated metal wall parts having a height and a width, at least two of the prefabricated metal wall parts have a height which is about 2.5 times larger than the width of the bottom edge, preferably more than five times larger, more preferably more than 10 times larger. It should be noted that the height of the prefabricated metal wall parts is to be understood to be the distance between the bottom edge and the top edge of the prefabricated metal wall parts when present in the tower. It should be understood that the length direction is defined in the direction of the height of the tower. This means that the tower comprises prefabricated metal wall parts which are considerably higher than wide, thus resulting in long side edges of the essentially quadrangular portion of the prefabricated metal wall parts and thereby enabling long flanges being provided at least partly on the side edge thereof. These long flanges enable a large stiffening potential of the tower.

In the invention the first flange of a prefabricated metal wall part is attached to the second flange of an adjacent second prefabricated metal wall part by fastening means. The flanges are now fixedly connected, thereby increasing the stiffening potential because of the double thickness of the rib. Fastening means comprise for instance a weld or a rivet. In a preferred embodiment of the invention, the fastening means comprise nuts and bolts. This enables to fasten quickly the first and second flange of two adjacent panels to each other. The holes required for the bolts to be inserted into may already be present in the prefabricated metal wall parts or may be drilled at the site where the connection between the adjacent panels is made. The use of nuts and bolts also enables to temporarily undo the connection, for instance to remove a prefabricated metal wall part from the construction, or to replace a prefabricated metal wall part. It also allows easy on-site and/or off-site inspection.

In an embodiment of the invention the essentially quadrangular portion of the prefabricated metal wall parts is preferably orthogonal or trapezial wherein the length of the first side edge is approximately equal to the length of the second side edge and
wherein the bottom edge is longer than the top edge. In case of constructing an essentially cylindrical tower, the use of orthogonal prefabricated metal wall parts is called for, in case of constructing a conical tower, trapezial prefabricated metal wall parts are called for. Conical towers enable to construct a tower with a large base and become slimmer with increasing height of the tower. Tapering can be over the entire height of the tower or over part of the length of the tower. The latter can also be achieved by using prefabricated metal wall parts to form essentially cylindrical tower sections and by using prefabricated metal wall parts to form essentially conical tower sections and combine these tower sections into one tower.

Kinked prefabricated metal wall parts may be used in the upper levels of a conically tapered tower or tower section for a wind turbine wherein the lower levels are made using prefabricated metal wall parts with an essentially flat quadrangular portion, thus reducing the number of prefabricated metal wall parts required for a full ring. One prefabricated metal wall part with one kink in the essentially quadrangular portion in a given upper level ring will link up with two prefabricated metal wall parts which have an essentially flat quadrangular portion in the ring immediately below the upper level ring. In case the kinked prefabricated metal wall parts contains more kinks, it may link up with a corresponding number of prefabricated metal wall parts with an essentially flat quadrangular portion. It will be clear that kinked prefabricated metal wall parts in a lower level can also be combined with kinked prefabricated metal wall parts in the upper level.

In an embodiment of the invention the tower has an essentially annular, preferably essentially circular horizontal cross-section. An essentially annular horizontal cross section is also obtained if a polygonal horizontal cross section is taken with a large number of facets such as a pentagon or hexagon. still another embodiment the essentially flat quadrangular prefabricated metal wall parts also comprises at least one kink essentially in the direction between the bottom edge and the top edge of the prefabricated metal wall part. The kink (or kinks) therefore runs in the direction of the height of the tower. With the kink (or kinks) a higher buckling stiffness of the prefabricated metal wall part is obtained. It may also increase the number of facets of the polygonal thereby achieving a smoother exterior of the tower.

The invention is also embodied in a tower for a wind turbine as described hereinabove wherein the first flange is provided with an additional first flange along at least part of the length of the first flange and/or wherein the second flange is provided with an additional second flange along at least part of the length of the second flange. This is advantageous for instance for a further increase in stiffening the tower, particularly when the first flange and second flange are both provided with an additional flange, wherein the first flange with its respective additional flange preferably essentially forms an L-shape and/or wherein the second flange with its respective additional flange preferably essentially forms an L-shape. For the purpose of this application, these additional flanges on the first and/or second flanges may be used to attach objects thereto such as stairs, or internal floors.

The invention is also embodied in a tower for a wind turbine as described hereinabove wherein the first and/or second flanges are at least partly folded back towards the inwardly facing surface of the essentially quadrangular portion of the prefabricated metal wall part, thereby effectively doubling the thickness of the flanges. This doubling of the flanges causes an additional stiffening of the construction. It will be clear to the skilled person that the flange could also be folded back twice or more contributing to the stiffening effect.

In an embodiment of the invention the prefabricated metal wall parts are steel parts, preferably high strength steel parts, for instance having a yield strength of about 355 MPa or higher. The use of steel enables to use prefabricated metal wall parts of a small thickness, which reduces the weight of the tower. The use of high strength steel prefabricated metal wall parts enables a further reduction in weight of the tower. As a result, the foundation of the tower can be constructed more efficient.

In an embodiment of the invention the first flange of a first prefabricated metal wall part is vertically staggeredly attached to the second flange of an adjacent second prefabricated metal wall part by fastening means. This application of prefabricated metal wall parts by a stretching bond type connection of the flanges of two adjacent prefabricated metal wall parts also requires the application of prefabricated metal wall parts of different lengths, at least in the first and last ring of the tower or tower section. The application of this staggered connection has the advantage over constructing the tower from rings of connected non-staggeredly connected prefabricated metal wall parts that the forces are lead through the construction without having to be led through horizontal flanges which connect the aforementioned rings. The overlap at the edges between the staggeredly connected prefabricated metal wall parts is between 1:2 and 1:4, preferably about 1:3, meaning that about ½ to ¾, preferably about 2/3 of the respective side edges of adjacent prefabricated metal wall parts overlap.

In another embodiment of the invention the circumference of the tower consists of n adjacently positioned prefabricated metal wall parts, wherein the angle between the first flange and the second flange is 360/n.

When constructing a tower according to the invention, there is no need for a high capacity crane to lift the tower sections on top of each other at the site where the tower is constructed. A relatively small building crane will be adequate to lift one prefabricated metal wall parts at a time, except in the case tower complete tower sections are built from the prefabricated metal wall parts which are then hoisted upon the foundation or the tower section already present. In that case a more powerful crane is required.

The absence of horizontal welds in the towers according to the invention eliminates a known source of fatigue failure, thereby allowing to relieve design restrictions for instance by allowing to use thinner gauge metal plate. The locations where a bottom edge of a first prefabricated metal wall part touches a top edge of a prefabricated metal wall part which is located immediately below the first prefabricated metal wall part can be sealed by using sealing means, for instance a sealant. This prevents the outside atmosphere to enter the structure and prevents corrosion. The locations where the first flange of a prefabricated metal wall part is connected to the second flange of the adjacent prefabricated metal wall part can, if so desired, also be sealed using sealing means, such as a sealant.

Although not part of the present invention, the tower could be provided with stiffening means, such as one or more preferably substantially horizontal stiffening rings. These stiffening means are preferably provided in the interior of the tower to absorb the horizontal forces exerted on the tower. These stiffening means may be provided at different heights of the tower. The prefabricated metal wall parts are connected to the ring, thereby obtaining an increased stiffness of the tower. Additional connecting struts may be used to connect the prefabricated metal wall parts to the ring. The stiffening means may also be formed by internal floors, or the stiffening means, such as a stiffening ring along internal circumference of the tower, may provide the base for the internal floor or floors. The stiffening means may also contribute to the even distribution of forces and loads over the entire circumference of the tower.

The prefabricated metal wall parts can be produced for example from hot-rolled metal using commonly known technology. The hot-rolled metal may be plate material or coiled material. This material, after optional leveling can be cut to the desired dimensions and shape, and the flanges can be formed on the edges of the essentially quadrangular portion of the prefabricated metal wall parts using conventional bending techniques. The kink or kinks can likewise be easily introduced. The prefabricated metal wall parts may be coated prior to use in the tower e.g. with zinc and/or an organic coating to extend the service life and to reduce maintenance.

The prefabricated metal wall parts may also comprise additional built-in functionality such as a door for entering the interior of the tower. Internal structures like stairs and floors can be easily installed.

The present invention will now be further explained by the following non-limitative drawings and examples.

In these drawings:
Figure 1 is a schematic representation of a wind turbine;
Figure 2 is a schematic representation of a tower for a wind turbine according to the state of the art (not to scale);
Figure 3 is a schematic representation of towers for a wind turbine according to the invention (not to scale);
Figure 4 is a schematic representation of a prefabricated metal wall parts according to the invention (not to scale);
Figure 5 is a schematic cross-section of the first ring of a tower for a wind turbine also highlighting a schematic representation of the bolted connection;
Figure 6 is a schematic representation of an L-shaped flange.
Figure 7 is a schematic representation of the tower construction at the location of a stiffening ring. As indicated above, this embodiment does not form part of the present invention.

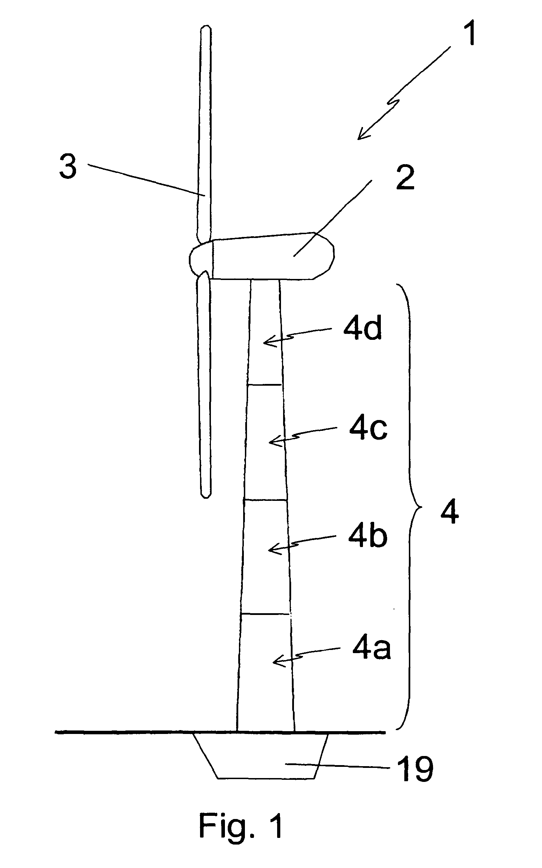

In Figure 1 a schematic representation of a wind turbine 1 is shown. The wind turbine 1 comprises a generator 2, a rotor 3 and a tower 4 onto which the combination of the generator and the rotor is mounted. The tower 4 has an exterior surface which forms the outside of the tower 4 and an interior surface which forms the inside of the tower. The tower consists of four tower sections 4a-4d. The wind turbine is placed on a foundation 19.

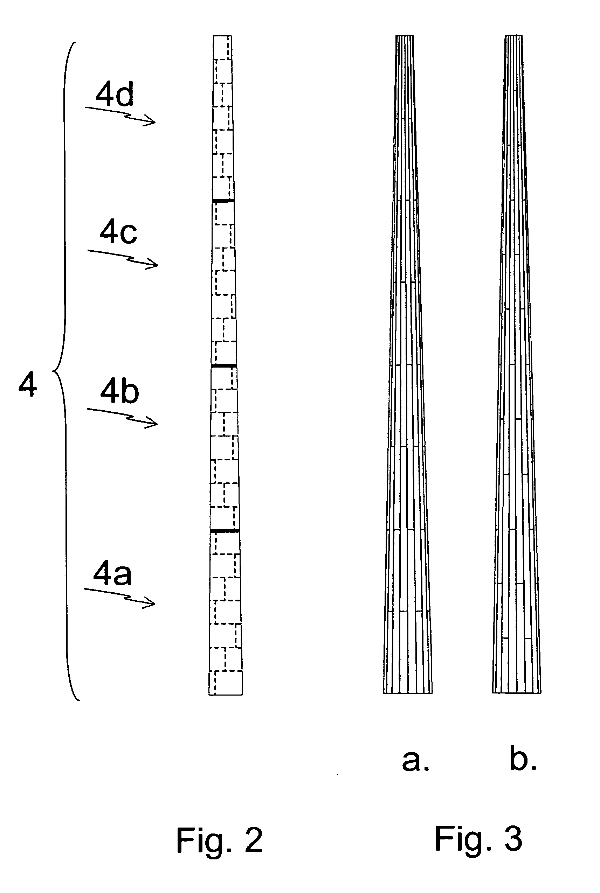

In figure 2 a tower 4 for a wind turbine according to the state of the art is shown. Tower segments 4a, 4b, 4c and 4d are mounted on top of each other. These tower segments are made off-site and connected through horizontal flanges and large bolts and nuts. These flanges are indicated schematically by the thick horizontal lines between the tower sections. The tower segments are made from curved plates which are welded together horizontally and vertically. These welds, indicated with the dashed lines, are known to be a possible source of fatigue failure, particularly the horizontal welds. For a tower of about 80 m high, a base of about 4.3 m and a top diameter of about 2.3 m is commonly used. The dimension of the base is limited by transport limitations.

In figure 3a a tower 4 for a wind turbine according to the invention is shown, wherein the staggered prefabricated metal wall parts each stagger over about half the length of the neighbouring prefabricated metal wall part and figure 3b shows a tower wherein the staggered prefabricated metal wall parts each stagger over about a third of the length of the neighbouring prefabricated metal wall part. The base of the tower is about 6.5 m in diameter whereas the top of the tower has a diameter of about 2.3 m. The 6.5 m base diameter poses no transport problems because it can be transported to the building site in pieces. The increase in width of the base of the tower increases the stiffness of the tower. It also enables to construct higher towers width adequate stiffness to install high power wind turbines.

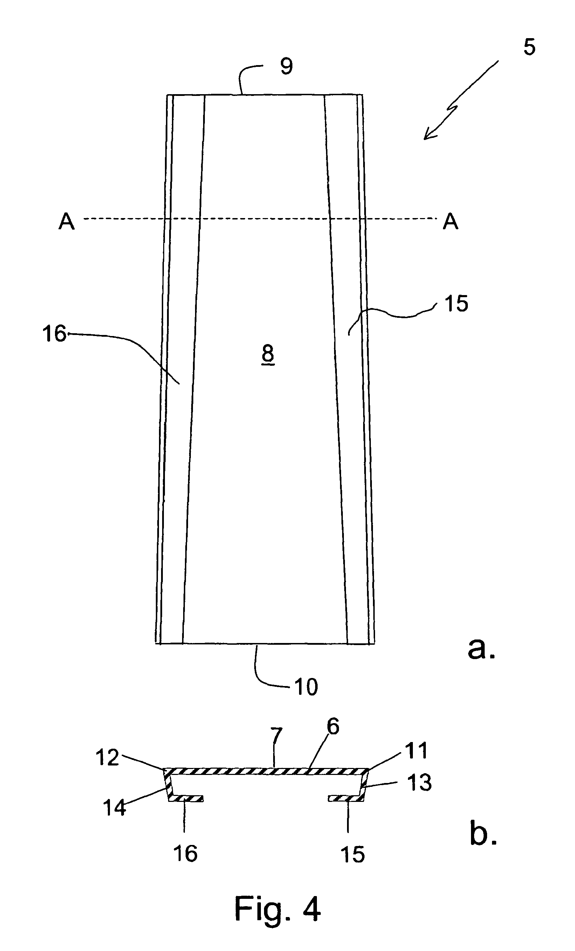

Figure 4a shows an embodiment of a prefabricated metal wall part 5 according to the invention for use in a tower 4 for a wind turbine 1 as described hereinabove. The prefabricated metal wall part 5 is characterised in that the wall part comprises an essentially quadrangular portion 6 having an outwardly facing surface 7 facing the exterior of the tower and an inwardly facing surface 8 facing the interior of the tower, said portion having a top edge 9, a bottom edge 10, a first side edge 11 and a second side edge 12, wherein the first side edge 11 is provided with a first flange 13 along at least part of the length of the first side edge 11 and wherein the second side edge 12 is provided with a second flange 14 along at least part of the length of the second side edge 12. The first flange 13 is provided with an additional first flange 15 which essentially forms an L-shape with the first flange 13 and the second flange 14 is provided with an additional second flange 16 which essentially forms an L-shape with the second flange 14. The prefabricated metal wall parts are not drawn to scale. The cross section A-A is shown in figure 4b. Typical dimensions for such a prefabricated metal wall parts for the lower ring of a conical tower or tower segment would be a width at the top edge 9 of between about 0.60 and 1.00 m, for example about 0.86 m, a width at the bottom edge 10 of between about 1.30 and 0.70 m, for example about 1.04 m, a height of between about 10 and 20 meters, for example 20 meters, and a height of the extending first flange 13 and second flange 14 of between 0.10 and 0.20 m, for example about 0.15 m. A typical thickness of the prefabricated metal wall parts would be between 8 and 16 mm, for example about 12 mm.

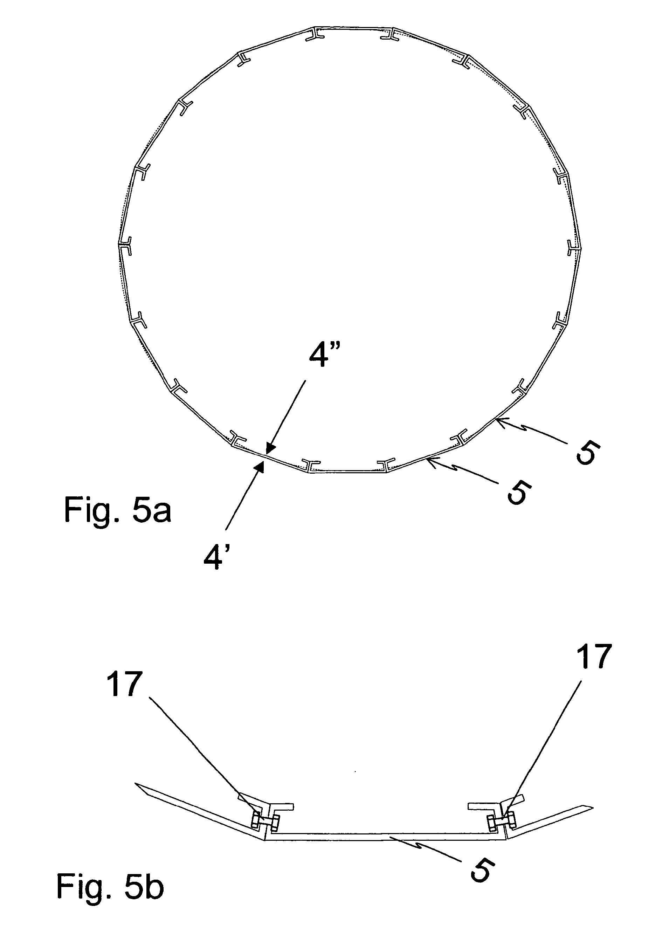

In Figure 5a a schematic cross section of the first ring of a tower for a wind turbine is shown. The essentially circular cross-section of the tower in this example is composed of eighteen prefabricated metal wall parts 5. The exterior of the tower is indicated by 4', the interior of the tower is indicated by 4". In this embodiment of the invention, the first flange of each prefabricated metal wall parts is attached to the second flange of the adjacent prefabricated metal wall parts by bolts and nuts which are passed through holes in the first and second flange. Figure 5b shows a part of the first ring with the prefabricated metal wall parts 5 and the nuts and bolts 17.

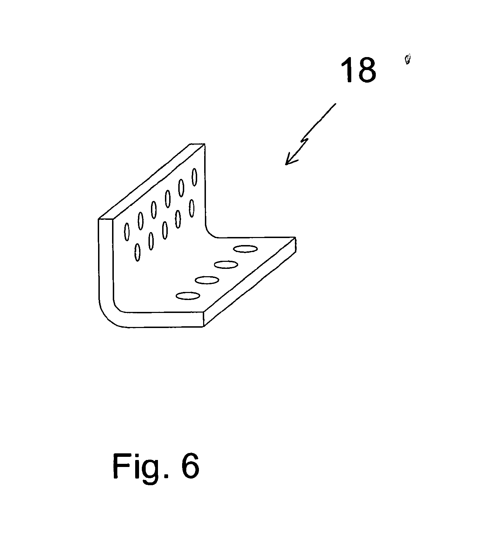

In figure 6 a schematic representation is shown of the L-shaped flange 18 which can be used to attach prefabricated metal wall parts of the first ring to the foundation 19 of the tower, or to the top ring on which the generator is attached.

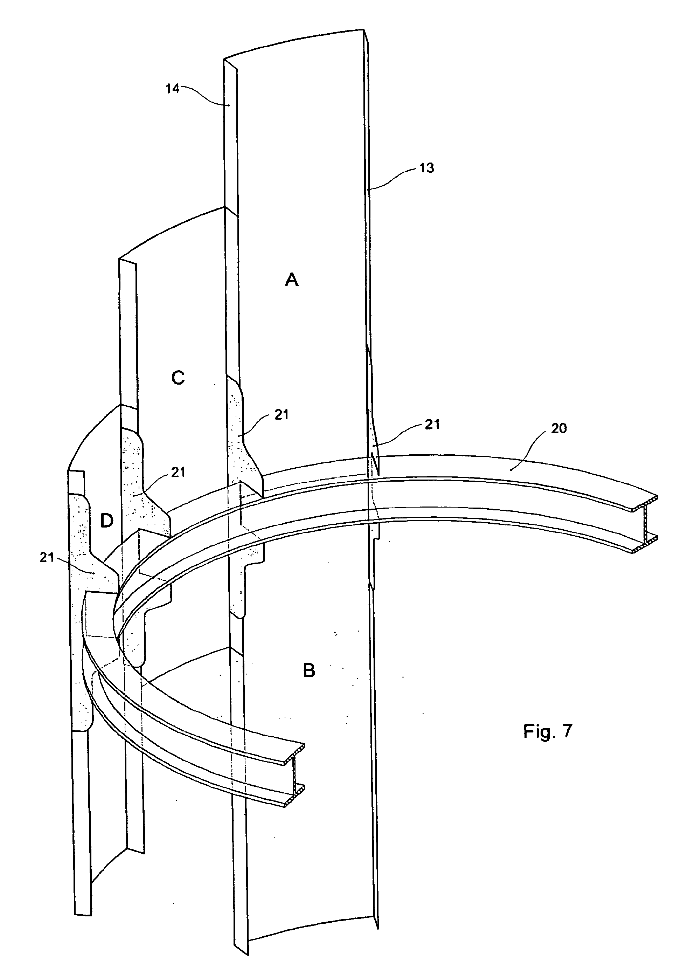

In figure 7 a schematic representation of part of the tower construction at the location of a stiffening ring is shown. As indicated above, this embodiment does not form part of the present invention. The adjacent, staggeredly connected prefabricated metal wall parts are connected using an overlap at the edges (i.e. in a stretcher-bond type connection) of 1:3 and are also connected to the stiffening ring 20 using connecting struts 21. As shown, these connecting struts 21 are connected to the flanges 13, 14 (see figure 4) of the prefabricated metal wall parts on one side, and to the stiffening ring 20 on the other side. In figure 7 four prefabricated metal wall parts are shown which are indicated with A, B, C and D. The lower edge of part A and the upper edge of part B are adjacent. The first side edge of part A is adjacent and connected to the second side edge of part C by their adjacent flanges and fastening means (not shown). The connecting struts 21 extend above and below the stiffening ring 20, thereby enabling fixedly connecting the side edges of upper part A to the side edges of lower part B. Due to the 1:3 overlap in this example only about 1/3 of the circumference of the tower has a horizontal seam at or near the location of the stiffening ring. In the example of figure 8 the horizontal seam between part A and B is located near the stiffening ring 20.

To construct a tower for a wind turbine according to the invention it is possible to first form a full ring of the tower by attaching at least two adjacent prefabricated metal wall parts along their adjacent flanges. This first full ring can be connected to an essentially flat and essentially horizontal foundation for the tower. Of course, the same result is obtained when starting with a first prefabricated metal wall part which is attached to the foundation after which a second prefabricated metal wall part is attached to the first prefabricated metal wall part and the foundation. Similarly, the following full ring can be constructed upon the ring already present by first building the entire ring and subsequently lifting is on top of the ring already present, or by connecting prefabricated metal wall parts to the ring already present and to each other one by one, the former procedure requiring a larger capacity crane than the latter procedure. Rings are added to the rings already present until the desired height of the tower is obtained.

The connection between the first full ring and the foundation may be achieved by using a flange that is connected to the foundation. In case of using prefabricated metal wall parts with an essentially flat or kinked quadrangular portion, the flanges may be simple L-shaped flanges.

To construct a tower for a wind turbine according to the invention it is possible to first form a full ring of the tower by attaching at least two adjacent prefabricated metal wall parts along their adjacent flanges vertically staggeredly. This implies the use of prefabricated metal wall parts of different lengths. In the example of figure 3a, full length prefabricated metal wall parts are combined with prefabricated metal wall parts of half that length whereas in the example of figure 3b, full length prefabricated metal wall parts are combined with prefabricated metal wall parts of 2/3 and 1/3 of that length (i.e. an overlap of 1:3). Off course, it is also possible to stagger the prefabricated metal wall parts differently than those mentioned in figure 3. These embodiments are also considered to be part of the invention. After the first full ring has been completed and connected to the foundation, the remainder of the tower is constructed using essentially full length prefabricated metal wall parts. In the last full ring prefabricated metal wall parts of different lengths have to be used to make the top edge of the last ring level. Of course it is also possible to use prefabricated metal wall parts of non-full length elsewhere in the tower if so desired. This staggeredly attaching the prefabricated metal wall parts provides in a large stiffness of the tower, without introducing horizontal fully annular or circular flanges to connect tower sections. When constructing a tower according to the invention, the tower may be constructed top down by starting to construct the top of the tower whilst being suspended onto a yoke construction, the yoke construction being provided with lifting means, such as a hydraulic jack. By first completing a full ring of the tower, preferably by connecting the prefabricated metal wall parts staggeredly, only just above ground level, and subsequently lifting the ring using the yoke and jacks, the following parts can also be mounted just above ground level. This way, there is no need for very high cranes during the construction of the tower, and the construction can be largely performed just above ground level, where wind forces are usually more moderate than high in the air. Also, correction of any misalignment is easier to perform. Another advantage of this top-down or push-up method is that it is more practical to fit a stiffening ring from below in a tapered construction and simultaneously using it to align the prefabricated metal wall parts and to optionally correct any misalignment.

It is of course to be understood that the present invention is not in any way limited to the described embodiments and examples described above, but encompasses any and all embodiments within the scope of the following claims.

## Claims

1. Tower (4) for a wind turbine (1) wherein the tower (4) has an exterior side (4') and an interior side (4") and wherein the tower is at least partly composed of prefabricated metal wall parts (5) wherein each wall part comprises an essentially flat essentially quadrangular portion (6) having an outwardly facing surface (7) in the direction of the exterior of the tower and an inwardly facing surface (8) in the direction of the interior of the tower, said portion having a top edge (9), a bottom edge (10), a first side edge (11) and a second side edge (12), wherein the first side edge (11) is provided with a first flange (13) along at least part of the length of the first side edge (11) and wherein the second side edge (12) is provided with a second flange (14) along at least part of the length of the second side edge (12), wherein the first flange (13) of a prefabricated metal wall part (5) is attached to the second flange (14) of an adjacent prefabricated metal wall part (5) by fastening means (17), **characterised in that** the first flanges (13) and the second flanges (14) of the prefabricated metal wall parts (5) extend towards the interior side (4") of the tower, wherein the tower (4) has an essentially annular horizontal cross-section, and wherein the prefabricated metal wall parts are not used as an inner and outer steel shell for pouring concrete.

2. Tower (4) for a wind turbine (1) according to claim 1 for a wind turbine of 2 MW and above.

3. Tower (4) for a wind turbine (1) according to claim 1 or 2 wherein the prefabricated metal wall parts (5) have a height and a width, and wherein at least two of the prefabricated metal wall parts (5) have a height which is about 2.5 times larger than the width of the bottom edge (10), preferably more than five times larger, more preferably more than 10 times larger.

4. Tower (4) for a wind turbine (1) according to any one of claims 1 to 3 wherein the fastening means (17) comprise nuts and bolts.

5. Tower (4) for a wind turbine (1) according to any one of claims 1 to 4 wherein the essentially quadrangular portion (6) of the prefabricated metal wall parts (5) is preferably essentially rectangular wherein the length of the first side edge (11) is approximately equal to the length of the second side edge (12) and wherein the bottom edge (10) is approximately equal to the length of the top edge (9), or wherein the essentially quadrangular portion (6) of the prefabricated metal wall parts (5) is essentially trapezial wherein the length of the first side edge (11) is approximately equal to the length of the second side edge (12) and wherein the bottom edge (10) is longer than the top edge (9).

6. Tower (4) for a wind turbine (1) according to any one of claims 1 to 5 wherein the tower (4) has an essentially circular horizontal cross-section.

7. Tower (4) for a wind turbine (1) according to any one of claims 1 to 6 wherein the quadrangular portion (6) of the prefabricated metal wall part (5) is essentially flat, and wherein the essentially quadrangular portion (6) of the prefabricated metal wall part (5) also comprises at least one kink essentially in the direction between the bottom edge (10) and the top edge (9' of the prefabricated metal wall part (5).

8. Tower (4) for a wind turbine (1) according to any one of claims 1 to 7 wherein the first flange (13) is provided with an additional first flange (15) and/or wherein the second flange (14) is provided with a an additional second flange (16).

9. Tower (4) for a wind turbine (1) according to any one of claims 1 to 7 wherein the first flanges (13) and/or the second flanges (14) are at least partly folded back towards the inwardly facing surface (8) of the essentially quadrangular portion (6) of the prefabricated metal wall part (5) for at least partly doubling the thickness of the first flanges (13) and/or second flanges (14).

10. Tower (4) for a wind turbine (1) according to any one of claims 1 to 9 wherein the prefabricated metal wall parts (5) are steel parts, preferably high strength steel parts.

11. Tower (4) for a wind turbine (1) according to any one of claims 1 to 10 wherein the first flange (13) of at least one prefabricated metal wall part (5) is vertically staggeredly attached to the second flange (14) of an adjacent prefabricated metal wall part (5) by fastening means (17), preferably wherein more than half of the adjacently positioned prefabricated metal wall parts (5) are attached vertically staggeredly.

12. Tower (4) for a wind turbine (1) according to any one of claims 1 to 11 wherein the circumference of the tower consists of *n* adjacently positioned prefabricated metal wall parts, wherein the angle between the first flange (13) and the second flange (14) is 360/*n*.

13. Tower (4) for a wind turbine (1) according to any one of claims 1 to 12 wherein the tower is substantially composed of prefabricated metal wall parts.

## Patentansprüche

1. Turm (4) für eine Windturbine (1), wobei der Turm (4) eine Außenseite (4') und eine Innenseite (4") hat und wobei der Turm zumindest teilweise aus vorgefertigten Metallwandteilen (4) besteht, wobei jeder Wandteil einen im Wesentlichen flachen und im Wesentlichen viereckigen Abschnitt (6) umfasst, der eine nach außen weisende Fläche (7) in Richtung auf das Äußere des Turmes sowie eine nach innen weisende Fläche (8) in Richtung auf das Innere des Turmes hat, wobei der Abschnitt eine obere Kante (9), eine untere Kante (10), eine erste seitliche Kante (11) und eine zweite seitliche Kante (12) hat, wobei die erste seitliche Kante (11) mit einem ersten Flansch (13) entlang wenigstens eines Teils der Länge der ersten seitlichen Kante (11) ausgestattet ist, und wobei die zweite seitliche Kante (12) mit einem zweiten Flansch (14) entlang wenigstens eines Teils der Länge der zweiten seitlichen Kante (12) ausgestattet ist, wobei die ersten Flansche (13) und die zweiten Flansche (14) der vorgefertigten Metallwandteile (5) sich in Richtung der Innenseite (4") des Turms erstrecken, wobei der erste Flansch (13) eines vorgefertigten Metallwandteils (5) an dem zweiten Flansch (14) eines angrenzenden vorgefertigten Metallwandteils (5) durch Befestigungsmittel (17) angebracht ist,
**dadurch gekennzeichnet, dass** sich die ersten Flansche (13) und die zweiten Flansche (14) des vorgefertigten Metallwandteils (5) in Richtung zur Innenseite (4") des Turms (4) erstrecken, dass der Turm (4) einen im Wesentlichen ringförmigen horizontalen Querschnitt besitzt, und dass die vorgefertigten Metallwandteile nicht als eine innere und äußere Stahlschale zum Betonieren verwendet werden.

2. Turm (4) für eine Windturbine (1) nach Anspruch 1 für eine Windturbine von 2 MW und darüber.

3. Turm (4) für eine Windturbine (1) nach Anspruch 1 oder 2, wobei die vorgefertigten Metallwandteile (5) eine Höhe und eine Breite haben, und wobei zumindest zwei der vorgefertigten Metallwandteile (5) eine Höhe haben, die etwa 2,5-mal größer ist als die Breite der unteren Kante (10), vorzugsweise mehr als fünfmal größer, noch bevorzugter mehr als 10-mal größer.

4. Turm (4) für eine Windturbine (1) nach einem der Ansprüche 1 bis 3, wobei die Befestigungsmittel (17) Muttern und Schrauben enthalten.

5. Turm (4) für eine Windturbine (1) nach einem der Ansprüche 1 bis 4, wobei der im Wesentlichen viereckige Abschnitt (6) der vorgefertigten Metallwandteile (5) vorzugsweise im Wesentlichen rechteckig ist, wobei die Länge der ersten seitlichen Kante (11) in etwa gleich der Länge der zweiten seitlichen Kante (12) ist, und wobei die untere Kante (10) in etwa gleich der Länge der oberen Kante (9) ist, oder wobei der im Wesentlichen viereckige Abschnitt (6) der vorgefertigten Metallwandteile (5) im Wesentlichen trapezförmig ist, wobei die Länge der ersten seitlichen Kante (11) in etwa gleich der Länge der zweiten seitlichen Kante (12) ist, und wobei die untere Kante (10) länger als die obere Kante (9) ist.

6. Turm (4) für eine Windturbine (1) nach einem der Ansprüche 1 bis 5, wobei der Turm (4) einen im Wesentlichen kreisförmigen horizontalen Querschnitt hat.

7. Turm (4) für eine Windturbine (1) nach einem der Ansprüche 1 bis 6, wobei der im Wesentlichen viereckige Abschnitt (6) der vorgefertigten Metallwandteile (5) im Wesentlichen flach ist, und wobei der im Wesentlichen viereckige Abschnitt (6) des vorgefertigten Metallwandteils (5) auch wenigstens eine Knickstelle im Wesentlichen in Richtung zwischen der unteren Kante (10) und der oberen Kante (9) des vorgefertigten Metallwandteils (5) enthält.

8. Turm (4) für eine Windturbine (1) nach einem der Ansprüche 1 bis 7, wobei der erste Flansch (13) mit einem zusätzlichen ersten Flansch (15) versehen ist und/oder wobei der zweite Flansch (14) mit einem zusätzlichen zweiten Flansch (16) versehen ist.

9. Turm (4) für eine Windturbine (1) nach einem der Ansprüche 1 bis 7, wobei die ersten Flansche (13) und/oder die zweiten Flansche (14) zumindest teilweise nach hinten gefaltet sind in Richtung auf die nach innen weisende Fläche (8) des im Wesentlichen viereckigen Abschnitts (6) des vorgefertigten Metallwandabschnitts (5), um die Dicke der ersten Flansche (13) und/oder der zweiten Flansche (14) zumindest teilweise zu verdoppeln.

10. Turm (4) für eine Windturbine (1) nach einem der Ansprüche 1 bis 9, wobei die vorgefertigten Metallwandteile (5) Stahlteile sind, vorzugsweise hochfeste Stahlteile.

11. Turm (4) für eine Windturbine (1) nach einem der Ansprüche 1 bis 10, wobei der erste Flansch (13) von wenigstens einem vorgefertigten Metallwandteil (5) vertikal versetzt an dem zweiten Flansch (14) eines angrenzenden vorgefertigten Stahlwandteils (5) durch Befestigungsmittel (17) angebracht ist, wobei vorzugsweise mehr als die Hälfte der angrenzend angeordneten vorgefertigten Metallwandteile (5) vertikal versetzt angebracht sind.

12. Turm (4) für eine Windturbine (1) nach einem der Ansprüche 1 bis 11, wobei der Umfang des Turms aus n angrenzend angeordneten vorgefertigten Metallwandteilen besteht, wobei der Winkel zwischen dem ersten Flansch (13) und dem zweiten Flansch (14) 360/n beträgt.

13. Turm (4) für eine Windturbine (1) nach einem der Ansprüche 1 bis 12, wobei der Turm im Wesentlichen aus vorgefertigten Metallwandteilen besteht.

## Revendications

1. Tour (4) pour une éolienne (1), dans laquelle la tour (4) présente une face extérieure (4') et une face intérieure (4") et dans laquelle la tour est au moins en partie constituée d'éléments de paroi (5) métalliques préfabriqués, chaque élément de paroi comportant une partie (6) sensiblement plane et sensiblement quadrangulaire avec une surface (7) tournée vers l'extérieur, en direction de l'extérieur de la tour, et une surface (8) tournée vers l'intérieur, en direction de l'intérieur de la tour, ladite partie possédant un bord supérieur (9), un bord inférieur (10), un premier bord latéral (11) et un deuxième bord latéral (12), le premier bord latéral (11) étant pourvu d'une première aile (13), au moins sur une portion de la longueur du premier bord latéral (11), et le deuxième bord latéral (12) étant pourvu d'une deuxième aile (14), au moins sur une portion de la longueur du deuxième bord latéral (12), la première aile (13) d'un élément de paroi (5) métallique préfabriqué étant liée par des moyens de fixation (17) à la deuxième aile (14) d'un élément de paroi (5) préfabriqué contigu, **caractérisée par le fait que** les premières ailes (13) et les deuxièmes ailes (14) des éléments de paroi (5) métalliques préfabriqués s'étendent en direction de la face intérieure (4") de la tour, la tour (4) présentant une section transversale horizontale sensiblement annulaire, et les éléments de paroi métalliques préfabriqués n'étant pas utilisés en tant qu'enveloppe d'acier intérieure ou extérieure pour verser du béton.

2. Tour (4) pour une éolienne (1) selon la revendication 1, destinée à une éolienne de 2 MW et plus.

3. Tour (4) pour une éolienne (1) selon la revendication 1 ou 2, dans laquelle les éléments de paroi (5) métalliques préfabriqués présentent une hauteur et une largeur et dans laquelle au moins deux des éléments de paroi (5) métalliques préfabriqués ont une hauteur qui est environ 2,5 fois plus grande que la largeur du bord inférieur (10), de préférence plus de cinq fois plus grande et notamment plus de 10 fois plus grande.

4. Tour(4) pour une éolienne (1) selon l'une quelconque des revendications 1 à 3, dans laquelle les moyens de fixation (17) comprennent des vis et des écrous.

5. Tour (4) pour une éolienne (1) selon l'une quelconque des revendications 1 à 4, dans laquelle la partie (6) sensiblement quadrangulaire des éléments de paroi (5) métalliques préfabriqués a de préférence une forme sensiblement rectangulaire, la longueur du premier bord latéral (11) étant à peu près égale à la longueur du deuxième bord latéral (12) et le bord inférieur (10) étant à peu près égal à la longueur du bord supérieur (9), ou dans laquelle la partie (6) sensiblement quadrangulaire des éléments de paroi (5) métalliques préfabriqués a de préférence une forme sensiblement trapézoïdale, la longueur du premier bord latéral (11) étant à peu près égale à la longueur du deuxième bord latéral (12) et le bord inférieur (10) étant plus long que le bord supérieur (9).

6. Tour (4) pour une éolienne (1) selon l'une quelconque des revendications 1 à 5, dans laquelle la tour (4) présente une section transversale horizontale sensiblement circulaire.

7. Tour (4) pour une éolienne (1) selon l'une quelconque des revendications 1 à 6, dans laquelle la partie (6) quadrangulaire de l'élément de paroi (5) métallique préfabriqué est sensiblement plane et dans laquelle la partie (6) sensiblement quadrangulaire de l'élément de paroi (5) métallique préfabriqué comporte également au moins une déformation, sensiblement dans la direction entre le bord inférieur (10) et le bord supérieur (9) de l'élément de paroi (5) métallique préfabriqué.

8. Tour (4) pour une éolienne (1) selon l'une quelconque des revendications 1 à 7, dans laquelle la première aile (13) est pourvue d'une première aile supplémentaire (15) et/ou la deuxième aile (14) est pourvue d'une deuxième aile supplémentaire (16).

9. Tour (4) pour une éolienne (1) selon l'une quelconque des revendications 1 à 7, dans laquelle les premières ailes (13) et/ou les deuxièmes ailes (14) sont au moins en partie pliées en arrière, en direction de la surface (8) tournée vers l'intérieur de la partie (6) sensiblement quadrangulaire de l'élément de paroi (5) métallique préfabriqué, aux fins de doubler au moins en partie l'épaisseur des premières ailes (13) et/ou des deuxièmes ailes (14).

10. Tour (4) pour une éolienne (1) selon l'une quelconque des revendications 1 à 9, dans laquelle les éléments de paroi (5) métalliques préfabriqués sont des éléments en acier, de préférence en acier à résistance élevée.

11. Tour (4) pour une éolienne (1) selon l'une quelconque des revendications 1 à 10, dans laquelle la première aile (13) d'au moins un élément de paroi (5) métallique préfabriqué est reliée verticalement, en alternance, à la deuxième aile (14) d'un élément de paroi (5) métallique préfabriqué contigu, par des moyens de fixation (17), et dans laquelle de préférence plus de la moitié des éléments de paroi (5) métalliques préfabriqués, disposés les uns à côté des autres, sont reliés verticalement, en alternance.

12. Tour (4) pour une éolienne (1) selon l'une quelconque des revendications 1 à 11, dans laquelle la circonférence de la tour est constituée de n éléments de paroi métalliques préfabriqués, disposés côte à côte, l'angle entre la première aile (13) et la deuxième aile (14) étant de 360/n.

13. Tour (4) pour une éolienne (1) selon l'une quelconque des revendications 1 à 12, dans laquelle la tour est constituée sensiblement d'éléments de paroi métalliques préfabriqués.
